# EUROPEAN PATENT SPECIFICATION

(11) **EP 4 020 637 B1**
(45) Date of publication and mention of the grant of the patent: **25.06.2025**
(21) Application number: 20868718.6
(22) Date of filing: 22.09.2020
(51) Int. Cl.: H01M 4/587, H01M 4/36, H01M 4/62, H01M 4/133, H01M 10/0525

(54) **NEGATIVE ELECTRODE AND SECONDARY BATTERY INCLUDING SAME**
NEGATIVE ELEKTRODE UND SEKUNDÄRBATTERIE DAMIT
ÉLECTRODE NÉGATIVE ET BATTERIE SECONDAIRE LA COMPRENANT

(30) Priority: 27.09.2019 KR 20190120025
(43) Date of publication of application: 29.06.2022
(73) Proprietor: LG ENERGY SOLUTION, LTD., Seoul 07335 (KR)
(72) Inventor: LEE, Chang Ju, Daejeon 34122 (KR); WOO, Sang Wook, Daejeon 34122 (KR); JUNG, Dong Sub, Daejeon 34122 (KR); NOH, Suk In, Daejeon 34122 (KR)
(74) Representative: Hoffmann Eitle
(86) International application number: PCT/KR2020/012802
(87) International publication number: WO 2021/060813

(56) References cited:
- EP-A2- 3 396 745
- CN-C- 1 278 436
- JP-A- 2013 084 601
- KR-A- 20070 073 240
- KR-A- 20140 085 822
- KR-A- 20160 128 912
- KR-A- 20180 125 235
- US-B2- 9 281 513

## Description

### TECHNICAL FIELD

### Technical Field

The present invention relates to a negative electrode and a secondary battery including the same, the negative electrode including a negative electrode active material layer, the negative electrode active material layer including a negative electrode active material, the negative electrode active material including a carbon-based negative electrode active material, the carbon-based negative electrode active material including: a core containing a plurality of flake artificial graphite primary particles; natural graphite disposed on the core; and an amorphous carbon-based material, wherein the natural graphite is contained in the carbon-based negative electrode active material in an amount of 10 wt% to 30 wt%, and the carbon-based negative electrode active material has a sphericity of 0.78 to 0.83.

### BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices such as portable computers, mobile phones, and cameras have increased. In general, a secondary battery is composed of a positive electrode, a negative electrode, an electrolyte, and a separator. The negative electrode may include a negative electrode active material in which lithium ions from the positive electrode are intercalated and deintercalated. A carbonaceous material such as graphite may be used as the negative electrode active material.

Artificial graphite may be used as the carbonaceous material, and the artificial graphite may also be used in a secondary particle form. In the case where the artificial graphite is used as a negative electrode active material, there is an advantage that the rate characteristics of the secondary battery may be improved.

However, since the artificial graphite in the secondary particle form generally has an irregular shape, a contact area between a binder in the negative electrode and the artificial graphite decreases, so that there is a limitation in that negative electrode adhesion (adhesion between the negative electrode active materials and/or adhesion between the negative electrode active material and a current collector) is low. There is a method that forms a functional group including oxygen, etc. on the surface of the carbonaceous material, but this reduces the capacity of the carbonaceous material.

Therefore, the present invention provides a novel negative electrode having improved negative electrode adhesion.

EP 3 396 745 A2 relates to a multilayer negative electrode comprising a negative electrode current collector configured to transfer electrons between an outer lead and a negative electrode active material, a first negative electrode mixture layer formed on one surface or both surfaces of the current collector and containing natural graphite as a negative electrode active material and a second negative electrode mixture layer formed on the first negative electrode mixture layer and containing artificial graphite as a negative electrode active material, and a lithium secondary battery including the same.

### DISCLOSURE OF THE INVENTION

### TECHNICAL PROBLEM

An aspect of the present invention provides a negative electrode, which may improve negative electrode adhesion and life characteristics of a battery, and a secondary battery including the same.

### TECHNICAL SOLUTION

According to an aspect of the present invention, there is provided a negative electrode including a negative electrode active material layer, the negative electrode active material layer including a negative electrode active material, the negative electrode active material including a carbon-based negative electrode active material, the carbon-based negative electrode active material including: a core containing a plurality of flake artificial graphite primary particles; natural graphite disposed on the core; and an amorphous carbon-based material, wherein the natural graphite is contained in the carbon-based negative electrode active material in an amount of 10 wt% to 30 wt%, and the carbon-based negative electrode active material has a sphericity of 0.78 to 0.83.

According to another aspect of the present invention, there is provided a secondary battery including the negative electrode.

### ADVANTAGEOUS EFFECTS

According to the present invention, since a carbon-based negative electrode active material included in a negative electrode includes a core containing artificial graphite at a proper level, life and rapid charging effect of a battery may be improved. In addition, as natural graphite is included in the surface of the carbon-based negative electrode active material at a proper level, the carbon-based negative electrode active material has a uniform shape and the surface of the carbon-based negative electrode active material becomes smooth, so that a contact area between a negative electrode binder and the carbon-based negative electrode active material may increase. Accordingly, the negative electrode adhesion may be improved and the life characteristics of the battery may be improved.

### MODE FOR CARRYING OUT THE INVENTION

Hereinafter, the present invention will be described in more detail to allow for a clearer understanding of the present invention.

Terms or words used in this specification and claims should not be restrictively interpreted as ordinary meanings or dictionary-based meanings, but should be interpreted as meanings and concepts conforming to the technical spirit of the present invention, based on the principle that an inventor can properly define the concept of a term to explain the invention in the best ways.

The terminology used herein is for the purpose of describing particular exemplary embodiments only and is not intended to limit the present invention. The terms of a singular form may include plural forms unless the context clearly indicates otherwise.

It will be understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

The expression "D₅₀" in the present specification may be defined as a particle diameter at a cumulative volume of 50% in a particle size distribution curve (graph curve of particle size distribution) of particles. The D₅₀, for example, may be measured by using a laser diffraction method. The laser diffraction method can generally measure a particle diameter ranging from a submicron level to a few mm and can obtain highly repeatable and high-resolution results.

In the present specification, a sphericity and an aspect ratio may be measured by a particle size analyzer (Morphologi4, Malvern).

### <Negative Electrode>

A negative electrode according to an embodiment of the present invention includes a negative electrode active material layer, wherein the negative electrode active material layer includes a negative electrode active material, the negative electrode active material includes a carbon-based negative electrode active material, the carbon-based negative electrode active material includes: a core containing a plurality of flake artificial graphite primary particles; natural graphite disposed on the core; and an amorphous carbon-based material, the natural graphite is contained in the carbon-based negative electrode active material in an amount of 10 wt% to 30 wt%, and the carbon-based negative electrode active material has a sphericity of 0.78 to 0.83.

The negative electrode includes the negative electrode active material layer, and specifically, may include a current collector and the negative electrode active material layer.

The current collector is not particularly limited so long as it has conductivity without causing adverse chemical changes in the battery. For example, copper, stainless steel, aluminum, nickel, titanium, sintered carbon, aluminum or stainless steel that is surface-treated with one of carbon, nickel, titanium, silver, or the like may be used. Specifically, a transition metal that absorbs carbon well, such as copper and nickel, may be used as the current collector. The current collector may have a thickness of 6 µm to 20 µm, but the thickness of the current collector is not limited thereto.

The negative electrode active material layer may be disposed on the current collector. The negative electrode active material layer may be disposed on at least one surface of the current collector, and specifically on one surface or both surfaces thereof. Unlike this, the negative electrode active material layer itself may be present as a negative electrode without the current collector.

The negative electrode active material layer includes the negative electrode active material. The negative electrode active material includes a carbon-based negative electrode active material.

The carbon-based negative electrode active material includes a core, natural graphite, and an amorphous carbon-based material.

The core includes a plurality of flake artificial graphite primary particles. Specifically, the core may be in a secondary particle form in which the plurality of flake artificial graphite primary particles are bonded. The secondary particle may be in an assembly form formed by artificially bonding the plurality of flake artificial graphite primary particles.

The artificial graphite primary particles may have an average particle diameter (D₅₀) of 3 µm to 15 µm, specifically 7 µm to 12 µm, and more specifically 10 µm to 12 µm. In the case in which the above range is satisfied, graphitization is easily performed, capacity is excellent due to a proper specific surface area, and rapid charging performance of the battery is excellent due to proper orientation characteristics.

The artificial graphite primary particles may have an aspect ratio of 0.5 to 1, and specifically, 0.6 to 0.7. In the case in which the above range is satisfied, the shape of the carbon-based negative electrode active material is maintained well, and thus characteristics of the battery may be improved.

The core may further include an amorphous carbon-based material. The amorphous carbon-based material may serve to bond the artificial graphite primary particles in the core.

The core may have an average particle diameter (D₅₀) of 10 µm to 25 µm, and specifically, 11 µm to 22 µm. In the case in which the above range is satisfied, the negative electrode active material is easily dispersed in a negative electrode slurry, and output characteristics of the battery may be improved.

The natural graphite is disposed on the core. The natural graphite may serve to increase negative electrode adhesion by making the surface of the carbon-based negative electrode active material smooth.

The natural graphite may have a bent form while surrounding the surface of the core. Thus, the surface of the carbon-based negative electrode active material may become smooth, and the shape of the carbon-based negative electrode active material may become more uniform.

The natural graphite is contained in the carbon-based negative electrode active material in an amount of 10 wt% to 30 wt%, and may specifically be contained in an amount of 20 wt% to 30 wt%, and more specifically 25 wt% to 30 wt%. In the case in which the content is less than 10 wt%, the improvement of the negative electrode adhesion is little, and thus it is difficult to expect life characteristics of the battery to be improved. On the contrary, in the case in which the content is greater than 30 wt%, the specific surface area of the carbon-based negative electrode active material excessively increases, and thus a side reaction of an electrolyte solution increases and the degree of expansion in volume of the carbon-based negative electrode active material increases. Accordingly, high-temperature storage performance and life characteristics of the battery may be deteriorated.

A weight ratio of the core to the natural graphite may be in a range of 64.29:35.71 to 89.47:10.53, specifically 64.29:35.71 to 88.10:11.90, and more specifically 64.29:35.71 to 78:22. In the case in which the above range is satisfied, the negative electrode adhesion is good, the side reaction of the electrolyte may be suppressed, and the degree of expansion in volume of the carbon-based negative electrode active material is suppressed, and thus high-temperature storage performance and life characteristics of the battery may be improved.

The amorphous carbon-based material may serve to bond the core and the natural graphite. The amorphous carbon-based material may be disposed between the core and the natural graphite, on the surface of the core, on the surface of the natural graphite, etc., and moreover, may be disposed in the core as described above.

The amorphous carbon-based material may be included in the carbon-based material in an amount of 5 wt% to 16 wt%, and specifically, 9 wt% to 14 wt%. In the case in which the above range is satisfied, the secondary particle form with a proper particle size may be achieved, and thus an initial efficiency may be improved.

The carbon-based negative electrode active material has a sphericity of 0.78 to 0.83, and may specifically have a sphericity of 0.783 to 0.827, and more specifically 0.795 to 0.825. In the case in which the sphericity is less than 0.78, since the shape between the carbon-based negative electrode active materials is excessively non-uniform and the surface of the carbon-based negative electrode active material has an excessively bent form, a contact area between the negative electrode binder and the carbon-based negative electrode active material is reduced. Thus, the negative electrode adhesion is deteriorated, and life characteristics of the battery is deteriorated. On the contrary, in the case in which the sphericity is greater than 0.83, the side reaction of the electrolyte increases, the expansion in volume of the carbon-based negative electrode active material largely increases, and thus high-temperature storage performance and life characteristics of the battery are deteriorated.

In the present invention, the sphericity of the carbon-based negative electrode active material is adjusted to a range of 0.78-0.83, and thus the shapes of the carbon-based negative electrode active materials may become similar to each other, and the surface of the carbon-based negative electrode active material may become smoother, so that the contact area between the negative electrode binder and the carbon-based negative electrode active material may increase. Accordingly, the negative electrode adhesion may be improved and the life characteristics of the battery may be improved.

The carbon-based negative electrode active material may have an average particle diameter (D₅₀) of 11 µm to 26 µm, and specifically, 12 µm to 23 µm. In the case in which the above range is satisfied, the carbon-based negative electrode active material may be dispersed well in the negative electrode slurry, and thus output characteristics of the battery may be improved.

Although not limited thereto, the carbon-based negative electrode active material may be prepared by the following method.

Specifically, a method for producing the carbon-based negative electrode active material may include a first method including: a) mixing and heating a core in which a plurality of needle cokes are bonded to each other, flake natural graphite, and a carbonaceous precursor to form composite particles; b) spheroidizing the composite particles; and c) graphitizing the spheroidized composite particles.

By the heating, the plurality of needle cokes become flake artificial graphite primary particles, and the carbonaceous precursor such as pitch becomes an amorphous carbon-based material.

The spheroidizing may be performed by typical spheroidization equipment.

The graphitizing may be performed by Acheson high-temperature electric furnace.

The negative electrode active material layer may further include a negative electrode binder. The negative electrode binder serves to connect the negative electrode active materials, maintain the shape of the negative electrode, and increase negative electrode adhesion.

The negative electrode binder may include at least one selected from the group consisting of a polyvinylidene fluoride-hexafluoropropylene copolymer (PVDF-co-HFP), a polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber (SBR), a fluorine rubber, a poly acrylic acid, and a material having hydrogen thereof substituted with Li, Na, Ca, or the like, or may include various copolymers thereof.

The negative electrode binder may be contained in the negative electrode active material layer in an amount of 1.2 wt% to 5 wt%, and specifically, 1.5 wt% to 4 wt%. In the case in which the above range is satisfied, the coating of the negative slurry is easily performed, and thus the negative electrode adhesion is excellent. In particular, the range of 1.2 wt% to 5 wt% corresponds to a level lower than a general negative electrode binder content. This is because the negative electrode of the present invention uses the above-described carbon-based negative electrode active material, and thus it is possible to derive sufficient negative electrode adhesion even though the low content of negative electrode binder is used.

The negative electrode active material layer may further include a conductive agent.

The conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used.

### <Secondary Battery>

A secondary battery according to another embodiment of the present invention includes a negative electrode, and the negative electrode is the same as the above-described negative electrode according to the embodiment.

Specifically, the secondary battery may include the negative electrode, a positive electrode, a separator disposed between the negative electrode and the positive electrode, and an electrolyte, wherein the negative electrode is the same as the above-described negative electrode. Since the negative electrode has been described above, detailed descriptions thereof will be omitted.

The positive electrode may include a positive electrode collector and a positive electrode active material layer which is formed on the positive electrode collector and includes a positive electrode active material.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm and may have a surface with fine roughness to improve adhesion to the positive electrode active material. The positive electrode collector, for example, may be used in various shapes such as that of a film, a sheet, a foil, a net, a porous body, a foam body, a non-woven fabric body, and the like.

The positive electrode active material may be a typically used positive electrode active material. Specifically, the positive electrode active material may include a layered compound, such as lithium cobalt oxide (LiCoO₂) or lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; nickel (Ni)-site type lithium nickel oxide expressed by a chemical formula of LiNi_{1-c2}M_{c2}O₂ (where M is at least one selected from the group consisting of cobalt (Co), manganese (Mn), aluminum (Al), copper (Cu), iron (Fe), magnesium (Mg), boron (B), and gallium (Ga), and c2 satisfies 0.01≤c2≤0.3); lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃MO₈ (where M is at least one selected from the group consisting of Fe, Co, Ni, Cu, and Zn); and LiMn₂O₄ having a part of Li being substituted with alkaline earth metal ions, but the positive electrode active material is not limited thereto. The positive electrode may be Li-metal.

The positive electrode active material layer may include a positive electrode conductive agent and a positive electrode binder as well as the above-described positive electrode active material.

In this case, the positive electrode conductive agent is used for providing conductivity to the electrode, wherein any conductive agent may be used without particular limitation as long as it has electronic conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

Also, the positive electrode binder functions to improve binding between positive electrode active material particles and adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be selectively used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

As the non-aqueous organic solvent, for example, an aprotic organic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Particularly, among the carbonate-based organic solvents, since ethylene carbonate and propylene carbonate, as cyclic carbonate, well dissociate a lithium salt due to high permittivity as a highly viscous organic solvent, the cyclic carbonate may be preferably used. Since an electrolyte having high electrical conductivity may be prepared when the above cyclic carbonate is mixed with low viscosity, low permittivity linear carbonate, such as dimethyl carbonate and diethyl carbonate, in an appropriate ratio and used, the cyclic carbonate may be more preferably used.

A lithium salt may be used as the metal salt, and the lithium salt is a material that is readily soluble in the non-aqueous electrolyte solution, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving service life characteristics of the battery, preventing a decrease in battery capacity, and improving discharge capacity of the battery.

According to another embodiment of the present invention, a battery module including the secondary battery as a unit cell and a battery pack including the battery module are provided. Since the battery module and the battery pack include the secondary battery having high capacity, high rate characteristics, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims appended herein.

### Examples and Comparative Examples

### Example 1: Preparation of Negative Electrode

A carbon-based negative electrode active material including: a core containing a plurality of artificial graphite primary particles; natural graphite disposed on the core; and an amorphous carbon-based material which bonds the plurality of artificial graphite primary particles and the natural graphite was used as a negative electrode active material.

The negative electrode active, a binder (CMC and SBR), carbon black as a conductive agent were mixed with purified water as a solvent in a weight ratio of 95.6:3.4:1.0, and stirred to form a negative electrode slurry. The negative electrode slurry was coated on a copper foil (current collector) and then the negative electrode collector coated with the negative electrode slurry was roll-pressed at a porosity of 28%, and dried in vacuum at 130 °C for 10 hours to prepare a negative electrode (1.4875 cm²). A loading amount of the prepared negative electrode is 3.61 mAh/cm².

### Examples 2 to 4 and Comparative Examples 1 and 2: Preparation of Negative Electrode

Negative electrodes of Examples and Comparative Examples were manufactured using different negative electrode active materials as Table 1.

**[Table 1]**

| | Average diameter (D₅₀) of artificia 1 graphite primary particles (µm) | Aspect ratio of artificia 1 graphite primary particles | Average diamete r (D₅₀) of cores (µm) | Weight ratio of core to natural graphite | Sphericit y of carbon-based negative electrode active material | Content (wt%) of natural graphite in carbon-based negative electrod e active material |
|---|---|---|---|---|---|---|
| Example 1 | 8 | 0.62 | 17 | 89.01:10.9 9 | 0.78 | 10 |
| Example 2 | 9 | 0.63 | 18 | 82.95:17.0 5 | 0.79 | 15 |
| Example 3 | 9 | 0.63 | 18 | 77.27:22.7 3 | 0.80 | 20 |
| Example 4 | 10 | 0.65 | 20 | 65.12:34.8 8 | 0.82 | 30 |
| Comparativ e Example 1 | 8 | 0.62 | 17 | 94.74:5.26 | 0.76 | 5 |
| Comparativ e Example 2 | 10 | 0.65 | 21 | 51.22:48.7 8 | 0.85 | 40 |

The average diameter (D₅₀), the aspect ratio, and the sphericity were measured by a particle size analyzer (Morphologi4, Malvern).

### Experimental Example 1: Evaluation of Negative Electrode Adhesion

Negative electrode adhesion was evaluated for the negative electrodes of Examples and Comparative Examples.

The negative electrode was punched out at 20 mm×150 mm, fixed to the center of a 25 mm×75 mm slide glass using a tape, and then 90-degree peel strength was measured while peeling off the current collector using UTM. Five or more peeling strengths were measured and the evaluation was carried out using an average value thereof.

### Experimental Example 2: Evaluation of Life Characteristics of Battery

Batteries were manufactured as follows, and life characteristics of the batteries were evaluated.

Li[Ni_{0.6}Mn_{0.2}Co_{0.2}]O₂ was used as a positive electrode active material. The positive electrode active material, carbon black as a conductive agent, and polyvinylidene fluoride (PVdF) as a binder were mixed in an N-methyl-2-pyrrolidone solvent in a weight ratio of 94:4:2 to prepare a positive electrode slurry.

The positive electrode slurry prepared was coated on a 15 µm thick aluminum metal thin film, as a positive electrode collector, and dried. In this case, a temperature of circulating air was 110 °C. Subsequently, the coated and dried positive electrode collector was roll-pressed and dried in a vacuum oven at 130 °C for 2 hours to prepare a positive electrode including a positive electrode active material layer.

The negative electrode, the prepared positive electrode, and a porous polypropylene separator were assembled by using a stacking method, and an electrolyte solution was injected into the assembled battery to prepare a lithium secondary battery.

The cell was charged at a current of 0.2 C up to SOC 30% to be activated, and then was charged under a constant current/constant voltage (CC/CV) mode (4.2 V, 0.05 C cut-off), and was discharged under a CC mode (0.2 C current, 3.0 V cut-off), which was performed three times. Thereafter, capacity retentions of 300 cycles were compared through life evaluation at 45 °C, 1C/1C.

**[Table 2]**

| | Negative electrode adhesion (gf/10mm) | Capacity retention (%) |
|---|---|---|
| Example 1 | 17 | 85.5 |
| Example 2 | 20 | 87.1 |
| Example 3 | 23 | 88.7 |
| Example 4 | 30 | 90.0 |
| Comparative Example 1 | 10 | 78.7 |
| Comparative Example 2 | 35 | 79.9 |

## Claims

1. A negative electrode comprising a negative electrode active material layer,
the negative electrode active material layer comprising a negative electrode active material,
the negative electrode active material comprising a carbon-based negative electrode active material,
the carbon-based negative electrode active material comprising:
a core containing a plurality of flake artificial graphite primary particles; natural graphite disposed on the core; and
an amorphous carbon-based material,
wherein the natural graphite is contained in the carbon-based negative electrode active material in an amount of 10 wt% to 30 wt%, and
the carbon-based negative electrode active material has a sphericity of 0.78 to 0.83.

2. The negative electrode of claim 1, wherein the artificial graphite primary particles have an average particle diameter (D50) of 3 µm to 15 µm.

3. The negative electrode of claim 1, wherein the artificial graphite primary particles have an average particle diameter (D50) of 10 µm to 12 µm.

4. The negative electrode of claim 1, Wherein the artificial graphite primary particles have an aspect ratio of 0.5 to 1.

5. The negative electrode of claim 1, wherein the core has an average particle diameter (D50) of 10 µm to 25 µm.

6. The negative electrode of claim 1, wherein a weight ratio of the core to the natural graphite is in a range of 64.29:35.71 to 89.47:10.53.

7. The negative electrode of claim 1, wherein the carbon-based negative electrode active material has an average particle diameter (D50) of 11 µm to 26 µm.

8. The negative electrode of claim 1, further comprising a negative electrode binder.

9. The negative electrode of claim 8, wherein the negative electrode binder is contained in the negative electrode active material layer in an amount of 1.2 wt% to 5 wt%.

10. A secondary battery comprising the negative electrode of claim 1.

## Patentansprüche

1. Negative Elektrode, umfassend eine Negativelektrodenaktivmaterialschicht,
wobei die Negativelektrodenaktivmaterialschicht ein Negativelektrodenaktivmaterial umfasst,
wobei das Negativelektrodenaktivmaterial ein Negativelektrodenaktivmaterial auf Kohlenstoffbasis umfasst,
wobei das Negativelektrodenaktivmaterial auf Kohlenstoffbasis umfasst: einen Kern, der eine Vielzahl von Primärteilchen aus künstlichem Flockengraphit enthält; natürlichen Graphit, der auf dem Kern angeordnet ist; und ein amorphes Material auf Kohlenstoffbasis,
wobei der natürliche Graphit in dem Negativelektrodenaktivmaterial auf Kohlenstoffbasis in einer Menge von 10 Gew.-% bis 30 Gew.-% enthalten ist, und
das Negativelektrodenaktivmaterial auf Kohlenstoffbasis eine Sphärizität von 0,78 bis 0,83 aufweist.

2. Negative Elektrode gemäß Anspruch 1, wobei die Primärteilchen aus künstlichem Graphit einen mittleren Teilchendurchmesser (D50) von 3 µm bis 15 µm aufweisen.

3. Negative Elektrode gemäß Anspruch 1, wobei die Primärteilchen aus künstlichem Graphit einen mittleren Teilchendurchmesser (D50) von 10 µm bis 12 µm aufweisen.

4. Negative Elektrode gemäß Anspruch 1, wobei die Primärteilchen aus künstlichem Graphit ein Seitenverhältnis von 0,5 bis 1 aufweisen.

5. Negative Elektrode gemäß Anspruch 1, wobei der Kern einen mittleren Teilchendurchmesser (D50) von 10 µm bis 25 µm aufweist.

6. Negative Elektrode gemäß Anspruch 1, wobei das Gewichtsverhältnis von Kern zu natürlichem Graphit im Bereich von 64,29:35,71 bis 89,47:10,53 liegt.

7. Negative Elektrode gemäß Anspruch 1, wobei das Negativelektrodenaktivmaterial auf Kohlenstoffbasis einen mittleren Teilchendurchmesser (D50) von 11 µm bis 26 µm aufweist.

8. Negative Elektrode gemäß Anspruch 1, ferner umfassend ein Negativelektrodenbindemittel.

9. Negative Elektrode gemäß Anspruch 8, wobei das Negativelektrodenbindemittel in der Negativelektrodenaktivmaterialschicht in einer Menge von 1,2 Gew.-% bis 5 Gew.-% enthalten ist.

10. Sekundärbatterie, umfassend die negative Elektrode gemäß Anspruch 1.

## Revendications

1. Électrode négative comprenant une couche de matériau actif d'électrode négative,
la couche de matériau actif d'électrode négative comprenant un matériau actif d'électrode négative, le matériau actif d'électrode négative comprenant un matériau actif d'électrode négative à base de carbone, le matériau actif d'électrode négative à base de carbone comprenant : un noyau contenant une pluralité de particules primaires de graphite artificiel en flocons ; du graphite naturel disposé sur le noyau ;
et un matériau à base de carbone amorphe, dans laquelle le graphite naturel est contenu dans le matériau actif d'électrode négative à base de carbone dans une quantité de 10 % en poids à 30 % en poids, et le matériau actif d'électrode négative à base de carbone présente une sphéricité de 0,78 à 0,83.

2. Électrode négative selon la revendication 1, dans laquelle les particules primaires de graphite artificiel présentent un diamètre de particule moyen (D50) de 3 µm à 15 µm.

3. Électrode négative selon la revendication 1, dans laquelle les particules primaires de graphite artificiel présentent un diamètre de particule moyen (D50) de 10 µm à 12 µm.

4. Électrode négative selon la revendication 1, dans laquelle les particules primaires de graphite artificiel présentent un rapport d'aspect de 0,5 à 1.

5. Électrode négative selon la revendication 1, dans laquelle le noyau présente un diamètre de particule moyen (D50) de 10 µm à 25 µm.

6. Électrode négative selon la revendication 1, dans laquelle un rapport de poids du noyau au graphite naturel est dans une plage de 64,29:35,71 à 89,47:10,53.

7. Électrode négative selon la revendication 1, dans laquelle le matériau actif d'électrode négative à base de carbone présente un diamètre de particule moyen (D50) de 11 µm à 26 µm.

8. Électrode négative selon la revendication 1, comprenant en outre un liant d'électrode négative.

9. Électrode négative selon la revendication 8, dans laquelle le liant d'électrode négative est contenu dans la couche de matériau actif d'électrode négative dans une quantité de 1,2 % en poids à 5 % en poids.

10. Batterie secondaire comprenant l'électrode négative selon la revendication 1.
